(19) **Europäisches Patentamt**
**European Patent Office**
**Office européen des brevets**

(11) Veröffentlichungsnummer: **0 494 450 A1**

(12) **EUROPÄISCHE PATENTANMELDUNG**

(21) Anmeldenummer: **91122265.1**

(22) Anmeldetag: **27.12.91**

(51) Int. Cl.5: **C08G 69/16**, C08K 5/3412, C08L 25/04

(30) Priorität: **08.01.91 DE 4100314**

(43) Veröffentlichungstag der Anmeldung:
**15.07.92 Patentblatt 92/29**

(84) Benannte Vertragsstaaten:
**DE FR GB IT NL**

(71) Anmelder: **BAYER AG**

**W-5090 Leverkusen 1 Bayerwerk(DE)**

(72) Erfinder: **Heinz, Hans-Detlef, Dr.**
**Breslauerstrasse 31**
**W-4150 Krefeld 11(DE)**
Erfinder: **Fahnler, Friedrich, Dipl.-Ing.**
**Wimmersweg 60**
**W-4150 Krefeld 11(DE)**

(54) **Polystyrolhaltige Lactamschmelzen und Gusspolyamid-Legierungen daraus.**

(57) Die Erfindung betrifft Lactamschmelzen, welche Styrolpolymere gelöst enthalten, ihre Verwendung (Verfahren) zur Herstellung von Halbzeugen und Fertigteilen nach dem anionischen Lactampolymerisationsverfahren, sowie entsprechende Formkörper aus diesen Polymerlegierungen, auf Basis anionisch polymerisierter Lactame (bevorzugt ε-Caprolactam) und Styrol(co)polymeren, wobei die Formkörper keine Delaminierungstendenz zeigen.

EP 0 494 450 A1

Die Erfindung betrifft Lactamschmelzen, welche Styrolpolymere gelöst enthalten, ihre Verwendung (Verfahren) zur Herstellung von Halbzeugen und Fertigteilen nach dem anionischen Lactampolymerisationsverfahren, sowie entsprechende Formkörper aus diesen Polymerlegierungen, auf Basis anionisch polymerisierter Lactame (bevorzugt ϵ-Caprolactam) und Styrol(co)polymeren, wobei die Formkörper keine Delaminierungstendenz zeigen.

Gußpolyamidteile, z.B. aus Caprolactam hergestellt, weisen bekanntlich ein hohes Niveau der mechanischen Eigenschaften auf; aufgrund ihrer gegenüber Standardspritzgußteilen erhöhten Kristallinität sowie der wesentlich höheren Molekulargewichte sind fast alle mechanischen Eigenschaftswerte gegenüber durch Polykondensation hergestellten Polyamiden verbessert. Aus diesem Grund ist Gußpolyamid ein attraktiver Werkstoff.

Ein Nachteil gegenüber den durch Polykondensation hergestellten Polyamiden liegt aber darin, daß es sich im allgemeinen nicht thermoplastisch verarbeiten läßt. Alle Zusatzstoffe, die im Formteil anwesend sein sollen, müssen daher im allgemeinen in die Lactamschmelze vor der Polymerisation eingebracht werden.

Die Herstellung von Gußpolyamidteilen, ausgehend von niedrigviskosen Lactamschmelzen und Katalysatoren sowie Aktivatoren (aktivierte anionische Polymerisation) ist bekannt (z.B. Vieweg, Müller; Kunststoff-Handbuch Bd. VI, Carl Hanser Verlag, München 1966). Gegenüber Polyurethan-RIM-System ist die Verfahrenstechnik einfacher, da z.B. aufgrund der sehr niedrigviskosen Lactamschmelzen drucklos und unter Einsatz einfacher Pumpen oder nach der Reaktionsspritzgußtechnik (unter Druck) gefördert werden kann.

Obwohl Gußpolyamid eine wesentlich geringere Wasseraufnahme als übliches PA 6 oder 66 aufweist, wäre es wünschenswert, diese noch weiter zu verringern. Entsprechende Gußpolyamide sollten dann eine erhöhte Dimensionsstabilität nach Wasseraufnahme sowie gegebenenfalls eine erhöhte Steifigkeit und Festigkeit zeigen.

Überraschend wurde nun gefunden, daß Polymerlegierungen auf Basis anionisch polymerisierbarer Lactame und Styrolpolymerer auf einfache Weise dadurch erhalten werden können, daß man Styrolpolymere bei erhöhter Temperatur in den Lactamen löst und anschließend die anionische Polymerisation in bekannter Weise durchführt.

Gegenstand der Erfindung sind daher Polymerlegierungen auf Basis anionisch polymerisierter Lactame und Styrolpolymerer, dadurch gekennzeichnet, daß

1) die Styrolpolymeren (vorzugsweise bei Temperaturen von 100 bis 190°C) in den Lactamen gelöst werden und

2) die resultierende, styrolpolymerhaltige Lactamschmelze in üblicher Weise anionisch polymerisiert wird.

Gegenstand der Erfindung sind auch Halbzeuge und Fertigteile aus den erfindungsgemäßen Polymerlegierungen. Auch die Verwendung der styrolpolymerhaltigen Lactamschmelzen (in einem Verfahren) zur Herstellung von Polymerlegierungen durch anionische Polymerisation ist Gegenstand der Erfindung. Auch die Styrolpolymeren gelöst enthaltenden Lactamschmelzen sind Gegenstand der Erfindung.

Als Lactame sind ω-Lactame auf Basis von ω-Amino-alkan-carbonsäuren, mit mindestens 4 C-Atomen (bevorzugt 4, 6-12 C-Atome) im Ring, welche in der Lage sind, die Styrolpolymeren im genannten Temperaturbereich zu lösen, geeignet. Ein repräsentatives Beispiel und gleichzeitig bevorzugtes Lactam ist ϵ-Caprolactam; auch Gemische von Caprolactam mit bis zu 30 Mol-% Laurinlactam sind geeignet und bevorzugt.

Als Styrolpolymere, welche erfindungsgemäß eingesetzt werden können, sind Homopolymere des Styrols sowie Copolymere mit solchen Monomeren, die die anionische Polymerisation nicht oder nicht prohibitiv stören, geeignet. Bevorzugte Styrolpolymere sind die Homopolymeren des Styrols bzw. des α-Methylstyrols bzw. des m- bzw. p-Methylstyrols bzw. des Gemisches letzterer ("Vinyltoluol") sowie Copolymere dieser mit Acrylnitril, Methacrylnitril, Maleinsäure- bzw. Itaconsäureanhydrid, Maleinsäure- bzw. Itaconsäureimiden (beispielsweise den N-Phenyl-Imiden), (Meth)acrylsäure(derivaten); beispielsweise (Meth)Acrylsäure-t-butylester) und Butadien. Besonders bevorzugt sind die Homopolymeren des Styrols bzw. des m- bzw. p-Methylstyrols bzw. ihres Gemisches und die Copolymeren dieser mit Acrylnitril, Maleinsäureanhydrid und Maleinsäureimiden. Insbesondere bevorzugt sind Homopolystyrole und die Copolymeren mit bis zu 40 Gew.-%, insbesondere bis zu 35 Gew.-%, Acrylnitril bzw. bis zu 50 Mol-%, insbesondere bis zu 20 Gew.-%, Maleinsäureanhydrid. Diese Polymeren sind bekannt (s. Encyclopedia of Polymer Science & Engineering, Vol. 16, Wiley Interscience, John Wiley & Sons, New York 1989); eine große Zahl von ihnen ist kommerziell in verschiedenen Molekulargewichtseinstellungen erhältlich. Die Polystyrole können i.a. in einem beliebigen Gemisch eingesetzt werden. Ein bevorzugtes Gemisch besteht aus Copolymeren (gegebenenfalls substituierter) Styrole sowie gegebenenfalls weiterer Monomerer und gegenüber Polyamiden oder Lactamen oder Katalysatoren bzw. Aktivatoren der anionischen Lactampolymerisation reaktiven Monomeren, beispielsweise Maleinsäureanhydrid als Comonomerem, einerseits und Homo- oder Copolymeren der gegebenenfalls substituierten Styrole sowie, wenn gewünscht, weiterer Monomerer, die kein entsprechend reaktives Monomer enthalten, andererseits.

Das Lösen der Polystyrole geschieht im Bereich von 100 bis 190°C, wobei Temperaturen von 120 bis 180°C bevorzugt und 130 bis 160°C besonders bevorzugt sind. Der Lösevorgang ist dann im allgemeinen nach wenigen Minuten bis ca. 10 h beendet. Üblicherweise erhält man eine klare Schmelze, in der das Styrolpolymer gelöst vorliegt. Unter "gelöst" wird im Rahmen der Erfindung verstanden, daß für das Augeeine klare Schmelze vorliegt.

Die erfindungsgemäßen Lactamschmelzen weisen im allgemeinen gegenüber der reinen Lactamschmelze eine erhöhte Viskosität auf; dies ist in erster Linie von der Menge an Styrolpolymerem und dessen Molekulargewicht abhängig. Je nach Molmasse und Typ der Styrolpolymeren sollen die Polystyrole zu 0,1 bis 50, bevorzugt 1 bis 40 und besonders bevorzugt 2 bis 35 Gew.-% in der Lactamschmelze, und damit auch in der nach anionischer Polymerisation resultierenden Polymerlegierung, anwesend sein. Insbesondere bevorzugt sind Styrolpolymergehalte in der modifizierten Lactamschmelze bzw. der resultierenden Polymerlegierung von mehr als 10 Gew.-%.

Als Katalysatoren zur Polymerisation der styrolpolymerhaltigen Lactamschmelzen sind prinzipiell alle bekannten Katalysatoren geeignet, beispielsweise die Natriumsalze des Caprolactams und des Pyrrolidons, Natriumhydrid, Natriummethanolat, Caprolactammagnesiumbromid und -iodid.

Es können prinzipiell alle bekannten Aktivatoren eingesetzt werden, z.B. Isocyanate, Säurechloride, Säureanhydride, Carbodiimide, Umsetzungsprodukte aus diesen Verbindungen mit Lactamen usw..

Bevorzugte Katalysatoren sind die Natriumsalze des Caprolactams und des Pyrrolidons sowie Caprolactammagnesiumbromid und -iodid. Bevorzugte Aktivatoren sind Isocyanate und Säurechloride bzw. die jeweiligen Umsetzungsprodukte mit Lactamen.

Die Polymerisationsgeschwindigkeit der styrolhaltigen Lactamschmelzen ist üblicherweise von der Katalysator- und Aktivatorschmelze abhängig. Durch die Anwesenheit der Polystyrole kann eine etwas höhere Katalysatormenge im Vergleich zur reinen Lactamschmelze erforderlich sein. Insbesondere muß bei Einsatz von Copolymeren mit Maleinsäureanhydrid eine erhöhte Katalysatormenge eingesetzt werden.

Die erfindungsgemäßen Polymerlegierungen zeichnen sich üblicherweise im Vergleich zu unmodifiziertem Gußpolyamid durch die reduzierte Wasseraufnahme und erhöhte Dimensionsstabilität aus. Weiterhin kann die Steifigkeit bzw. Festigkeit im konditionierten Zustand erhöht sein.

Die erfindungsgemäßen Lactamschmelzen können nach dem Verfahren der (aktivierten) anionischen Polymerisation zu Fertigteilen und Halbzeugen verarbeitet werden. Aus den Halbzeugen können nach bekannten Verfahren, beispielsweise durch spanabhebende Bearbeitung, Fertigteile hergestellt werden.

Die Copolymeren können sowohl zur Katalysator- wie auch zur Aktivatorschmelze gegeben werden. Bei der Zugabe von Anhydrid-funktionellen Copolymeren zur Aktivatorsäure kann es zu einer Gasentwicklung kommen, die sich aber nach einer gewissen Rührzeit wieder legt.

Die erfindungsgemäßen Lactamschmelzen und Polymerlegierungen können weitere übliche Zusatzstoffe, in üblichen Mengen, z.B. 0 bis 50 Gew.-%, vorzugsweise 0 bis 35 Gew.-%, beispielsweise Füll-/Verstärkungsstoffe, Pigmente, Stabilisatoren, Öle, Entformungsmittel, weitere polymere Legierungspartner, Polyether (auch aminoterminierte), einbaufähige Polyethe u.a.m., wie sie im Stand der Technik bekannt sind, enthalten.

Die folgenden Beispiele dienen zur Erläuterung der Erfindung, ohne sie darauf einzuschränken.

Beispiele
_____

Beispiel 1
_____

In Rundkolben wurden Mischungen aus 165 g $\epsilon$-Caprolactam und 15 g einer 18 %igen Lösung von Natriumcaprolactamat in Caprolactam unter $N_2$ aufgeschmolzen und unter Rühren homogenisiert. Dann wurden 20 g Polystyrol (Polystyrol 143 E; ein Produkt der BASF AG) zugegeben und unter Rühren innerhalb von ca. 1 h bei 140 bis 150°C gelöst. In derselben Weise wurden Mischungen aus Caprolactam (176, 8 g), Polystyrol 143 E (20 g) und eine Lösung eines aliphatischen Polyisocyanats in NMP (KU 2-8107; ein Produkt der BAYER AG) hergestellt. In beiden Fällen resultierten Klare, homogene, hellfarbige Lösungen.

Die beiden Lösungen wurden vereinigt und in einem Becherglas bei einer Wandtemperatur von 180°C polymerisiert. Die Viskosität der Mischung betrug ca. 300 mPas nach 95 s und 4500 mPas nach 150 s. Es resultierte ein hellbrauner Gußpolyamidblock.

Beispiel 2

In prinzipiell derselben Weise wie oben beschrieben wurden Klare Lösungen aus 74 g Caprolactam und 26 g der Katalysatormischung (s.o.) einerseits und 260 g Caprolactam und 40 g eines Styrol-Maleinsäureanhydrid-Copolymeren (MSA-Gehalt ca. 7 Gew.-%; DYLARK 232, ein Produkt der ARCO CHEMICAL COMPANY) hergestellt. Die Lösetemperatur betrug ca. 150°C.

Die Lösungen wurden vereinigt, 8 g der Aktivatorlösung (s.o.) zugegeben und in einem Becherglas bei einer Wandtemperatur von 180°C polymerisiert. Die Viskosität der polymerisierenden Schmelze betrug ca. 300 mPas nach 100 s und ca. 4500 mPas nach ca. 190 s. Es resultierte ein hellbrauner Gußpolyamidblock.

Beispiel 3

Unter Stickstoff wurden 140 g des im vorigen Beispiel benutzten Copolymeren in 560 g Caprolactam gelöst (150°C, 1,5 h). Es resultierte eine klare, hellfarbige Lösung.

Beispiel 4

In prinzipiell derselben Weise wie für Beispiel 1 beschrieben, wurden Lösungen aus 179 g Caprolactam und 21 g des Katalysators einerseits und 96,8 g Caprolactam, 3,2 g des Aktivators und 100 g der Mischung aus Beispiel 3 andererseits, bei 125°C hergestellt. Die Mischungen wurden vereinigt und in einem Becherglas bei einer Wandtemperatur von 180°C polymerisiert. Die Viskosität der polymerisierenden Schmelze lag nach 85 s bei ca. 300 mPas und nach 112 s bei ca. 4500 m Pas. Es resultierte ein gelber, homogener Gußpolyamidkörper.

Beispiel 5

20 g des in Beispiel 3 benutzten Copolymeren und 180 g Caprolactam wurden unter $N_2$ bei 150°C aufgeschmolzen und gerührt bis zur vollständigen Lösung des Copolymeren.

Die Viskositätsdaten (Viskositäten in [mPas]) dieser Lösung bei verschiedenen Temperaturen und Schergeschwindigkeiten sind in Tabelle 1 zusammengestellt. Die Messung erfolgte mit einem Rotationsviskosimeter der Firma Haake, Type VT 500.

Beispiele 6 + 7

Prinzipiell wie in den vorhergehenden Beispielen beschrieben wurden Gußpolyamidlegierungen mit Polystyrol und Styrol-Maleinsäureanhydrid-Copolymerem hergestellt. Dazu wurden Lösungen von 180 g Caprolactam und 21 g des Katalysators einerseits und 156,8 g Caprolactam, 3,2 g des Aktivators und je 20 g Polystyrol 143 E und Dylark 232 andererseits (Beispiel 6) bzw. 177 g Caprolactam und 23 g Katalysator einerseits und 156,8 g Caprolactam, 3,2 g Aktivator und je 20 g der beiden Copolymeren andererseits (Beispiel 7) hergestellt.

Die beiden Lösungen wurden wie vorher beschrieben vereinigt und polymerisiert. Die Mischung nach Beispiel 7 mit höherem Katalysatorgehalt polymerisierte etwas schneller als die nach Beispiel 6. In beiden Fällen entstanden homogene Formkörper, enthaltend 20 Gew.-% Polystyrol, die keinerlei Tendenz zur Delaminierung zeigten.

Tabelle 1

| Schergefälle [s⁻¹] →  Temperatur [°C] ↓ | 0,50 | 0,83 | 1,39 | 2,32 | 4,53 | 6,45 | 18 | 50 |
|---|---|---|---|---|---|---|---|---|
| 170 | - | - | 600 | 200 | 100 | 100 | 75 | 95 |
| 160 | 2500 | 1500 | 1200 | 540 | 310 | 230 | 125 | 110 |
| 150 | 3000 | 2000 | 1300 | 650 | 380 | 260 | 155 | 140 |
| 140 | 3200 | 2100 | 1300 | 750 | 420 | 320 | 180 | 160 |
| 130 | 3100 | 2000 | 1300 | 770 | 430 | 335 | 188 | 175 |
| 120 | 3200 | 2200 | 1400 | 830 | 470 | 366 | 215 | 197 |
| 110 | 3550 | 2250 | 1500 | 850 | 530 | 415 | 260 | 220 |
| 100 | - | 2300 | 1550 | 930 | 580 | 460 | 300 | 255 |
| 90 | - | - | 1650 | 1030 | 700 | 560 | 390 | 350 |

## Patentansprüche

1. Lactamschmelzen erhöhter Viskosität auf Basis anionisch polymerisierbarer Lactame mitmindestens 4 Kohlenstoffatomen im Ring,

dadurch gekennzeichnet, daß sie

0,1 bis 50 Gew.-%, bevorzugt 1 bis 40 Gew.-%, Styrolpolymere als Homopolymere von Styrolen oder als Copolymere von Styrolen mit solchen Comonomeren, welche die anionische Lactampolymerisation nicht oder nicht prohibitiv stören, in den Lactamen gelöst enthalten, und

0 bis 50 Gew.-% üblicher Zusatzstoffe in der Lactam/Styrolmischung zusätzlich enthalten seinkönnen.

2. Lactamschmelzen nach Anspruch 1, dadurch gekennzeichnet, daß Homopolymere des Styrols bzw. des α-Methylstyrols bzw. des m- bzw. p-Methylstyrols bzw. des Gemisches letzerer ("Vinyltoluol") und/oder Copolymere dieser Styrole mit Acrylnitril, Methacrylnitril, Maleinsäure- bzw. Itaconsäureanhydrid, Maleinsäure- bzw. Itaconsäureimiden, vorzugsweise den N-Phenylimiden, (Meth)acrylsäure und Butadien, in den Lactamen gelöst enthalten sind.

3. Lactamschmelzen nach Ansprüchen 1 und 2, dadurch gekennzeichnet, daß die Copolymeren der Styrole bis zu 40 Gew.-%, bevorzugt bis zu 35 Gew.-%, an Acrylnitril und bis zu 50 Gew.-%, bevorzugt bis zu 20 Gew.-%, Maleinsäureanhydrid oder Maleinsäure(phenyl)imide enthalten.

4. Lactamschmelzen nach Ansprüchen 1 bis 3, dadurch gekennzeichnet, daß die Styrolpolymeren zu 2 bis 35 Gew.-% in der Lactarnschmelze enthalten sind und Kombinationen aus Homopolymeren der Styrole und Styrolcopolymeren mit Acrylnitril einerseits und Styrol-Maleinsäureanhydridcopolymere und Styrol-Maleinsäure(phenyl)-imidcopolymere andererseits, bevorzugt sind.

5. Lactamschmelzen nach Ansprüchen 1 bis 4, dadurch gekennzeichnet, daß die Lactame ε-Caprolactam oder Mischungen aus ε-Caprolactam mit bis zu 30 Gew.-% ω-Laurinlactam sind.

6. Lactamschmelzen nach Ansprüchen 1 bis 5, dadurch gekennzeichnet, daß die Zusatzstoffe, Füll-/Verstärkungsstoffe, Pigmente, Stabilisatoren, Öle, Entformungsmittel, weitere polymere Legierungspartner, Polyoxyalkylene oder aminoterminierte Polyoxyalkylenether sind.

7. Verwendung der Styrol(co)polymer-haltigen Lactamschmelzen nach Ansprüchen 1 bis 6 zur Herstellung von Halbzeugen und Fertigteilen auf Basis von Gußpolyamidlegierungen nach dem Verfahren der anionischen Lactampolymerisation, unter Einsatz üblicher Katalysatoren, mit oder ohne Mitverwendung von Aktivatoren für die anionische Lactampolymerisation.

8. Formkörper reduzierter Wasseraufnahme und erhöhter Dimensionsstabilität auf Basis von Polymerlegierungen aus polymerisierten Lactamen und Styrol(co)polymeren, erhalten durch anionische Polymerisation der Lactamschmelzen nach Ansprüchen 1 bis 6.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WORLD PATENTS INDEX<br>Week 68,<br>Derwent Publications Ltd., London, GB;<br>AN 68-80794P<br>& SU-A-180 759 (KUDRYAVTSEV)<br>* Zusammenfassung *<br>--- | 1-3,5 | C08G69/16<br>C08K5/3412<br>C08L25/04 |
| X | WORLD PATENTS INDEX LATEST<br>Derwent Publications Ltd., London, GB;<br>AN 87-202684<br>& JP-A-62 131 040 (MITSUBISHI MONSANTO KK) 13.<br>Juni 1987<br>* Zusammenfassung *<br>----- | 1-2,4,<br>6-7 | |
| | | | **RECHERCHIERTE SACHGEBIETE (Int. Cl.5)**<br><br>C08G<br>C08K<br>C08L |

Der vorliegende Recherchenbericht wurde für alle Patentansprüche erstellt

| Recherchenort | Abschlußdatum der Recherche | Prüfer |
|---|---|---|
| DEN HAAG | 06 APRIL 1992 | SIEMENS T. |